# EUROPEAN PATENT SPECIFICATION

(11) **EP 2 084 051 B1**
(45) Date of publication and mention of the grant of the patent: **09.03.2016**
(21) Application number: 07822842.6
(22) Date of filing: 23.11.2007
(51) Int. Cl.: B62D 29/00, B60R 13/08

(54) **EXPANDABLE FILLER INSERT AND METHODS OF PRODUCING THE EXPANDABLE FILLER INSERT**
EXPANDIERBARER FILTEREINSATZ UND VERFAHREN ZUR HERSTELLUNG DES EXPANDIERBAREN FILTEREINSATZES
INSERT DE GARNITURE EXPANSIBLE ET PROCÉDÉS DE PRODUCTION DE L'INSERT DE GARNITURE EXPANSIBLE

(30) Priority: 27.11.2006 US 867203 P; 15.08.2007 DE 102007038659
(43) Date of publication of application: 05.08.2009
(73) Proprietor: Henkel AG & Co. KGaA, 40589 Düsseldorf (DE)
(72) Inventor: MONNET, Jean-Pierre, 18240 Boulleret (FR); LECLERC, Delphine, 58200 Cosne sur Loire (FR); MAGNET, Gregory, 58200 St. Loup (FR); WESCH, Karl, 69429 Waldbrunn (DE); RUDOLPH, Daniel, Shibuya-ku Tokyo 150-0036 (JP); JÄHNICHEN, Matthias, 69234 Dielheim (DE)
(86) International application number: PCT/EP2007/062746
(87) International publication number: WO 2008/065049

(56) References cited:
- EP-A- 0 383 498
- WO-A-01/54936
- WO-A-01/71225
- JP-A- 7 205 835
- JP-A- H10 323 911
- JP-A- 2003 094 475
- JP-A- 2005 088 682
- JP-A- 2006 069 342
- JP-A- 2007 084 015
- US-A- 5 631 027
- US-A- 5 649 400
- US-A1- 2002 053 179
- US-A1- 2005 249 916

## Description

The present invention relates to an expandable filler insert comprised of a polymer matrix, methods of making the expandable filler insert, and the use of the expandable filler insert to fill or seal cavities such as the hollow structural members of vehicles.

Foamable materials, generally aided by carriers, are currently used to fill and/or seal hollow structures or cavities, such as pillars of vehicles. Such materials foam and expand upon applying external heat of about 120 degrees Celsius to about 210 to 220 degrees Celsius (°C) to the automobile body in the electrodeposition or baked finish process, thereby providing sound insulation, soundproofing and vibration suppression and improving the quietness within the vehicle by blocking the transmission of road and wind noise during driving. Additionally, foamable materials are commonly used to strengthen or stiffen vehicle cavities by providing structural reinforcement of the hollow structure.

Generally, an expandable (also referred to as foamable) material is supported and fixed to predetermined sites in the cavity of a hollow structure until it is foamed and expanded by external heat. Support/fixation of the expandable material is typically necessary because otherwise the expandable material is susceptible to being dislodged from the desired position within the cavity prior to or during activation of the expandable material. As a result, the unsecured expandable material may not necessarily or reproducibly block or seal the cavity to an acceptable extent.

Holding jigs (also known as carriers or supports) were developed to hold the foamable materials in place until external heating was accomplished so that the desired space or cavity was filled or sealed. These carriers are made of materials such as metal or heat resistant rigid synthetic resins which have very different properties than the foamable material. The use of such carriers presents certain problems in that the foamable materials may not adhere strongly to the carrier, before and/or after activation of the foamable material. The foamable/foamed material thus may separate from the carrier, thereby interfering with consistent, uniform and durable filling or sealing of the cavity. Additionally, assembly or manufacture of a part comprised of a carrier and a foamable material may be relatively complicated and hence expensive due to the use of different materials for the components.

WO 01/054936 A1 describes a stiffening part in the form of a self-supporting body that expands upon heating to an expansion temperature. The body contains a first and a second group of ribs that are arranged at a distance from one another. During heat activation, heated air can flow through between the ribs arranged at a distance, so that a larger surface area of the stiffening material is exposed to the heat.

US 2005/0249916 describes another insert for filling the hollow space or cavity of a structure is a foamable sheet that is manufactured as a continuously formed sheet using continuous molding processes. The sheets are then processed into strips and the ends of the strips are overlapped and held together using an attaching device. These foamable or expandable materials can be capable of uniformly expanding to fill the hollow space or cavity when sufficiently heated. However, there are practical limits to the thickness of such sheets. This may make it difficult to introduce a quantity of the foamable material into the cavity which is sufficient to fully seal or fill the cavity, especially when the foamable material has a relatively low degree of expansibility or when the cavity is irregular in shape or has acute corners.

EP 383 498 describes support-less, foamable shaped parts for insertion into vehicle cavities and subsequent foaming. The shaped parts can be manufactured by extrusion, their cross section being adapted to the cross section of the cavity to be filled up.

JP H10 3239811 discloses an insert for filling the hollow space or cavity of a structure with an inner part made of a foamable material. The inner part comprises several opening in the foamable material through which heat can be vented to efficiently foam the inner part. In addition a clipping member is attached to the inner part to attach the insert to the structure.

Many hollow structures, such as a pillar of a vehicle, are constructed by combining two or more side metal sheets and the transverse cross-sectional shape of its cavity has corners where the side sheets are joined. These corners are often narrow and complicated and simply foaming and expanding the foamable material in the central area of the cavity or directionally expanding the foamable material is not enough to fill the entire cavity or the corners adequately.

Accordingly, there is still a need in the art for heat-expandable components adapted for use in hollow structures or cavities such as in pillars of automobiles and the like, which can be readily designed and controlled, which are inexpensive to manufacture, and which solve one or more problems of the prior art designs, such as those described above.

The present invention provides an expandable filler insert for filling or sealing a hollow space or cavity (e.g., a vehicle pillar) without the use of a carrier or support component. In one embodiment of the present invention, the insert comprises a self-supporting continuous structure with an interior space and an outer surface that substantially parallels the cross-sectional shape of the cavity but does not (in its unactivated state) contact the interior surface of the cavity. The self-supporting continuous structure is fabricated from a polymer matrix comprised of at least one polymer or polymer precursor and at least one latent blowing agent.Said insert further comprises at least one fixing element wherein the fixing element being either an integral part of the continuous structure protruding from the self-supporting continuous structure for securing the insert to the interior surface of the cavity, in the form of engaging projections that are capable of being inserted through openings in the cavity walls or a piece of a tacky substance. According to the invention, the insert, including the fixing element is additionally delimited by two basically parallel flat surfaces.

The expandable filler insert can have one or more protrusions extending into the interior space of the self-supporting continuous structure providing additional polymer matrix to assure complete sealing or filling of the cavity. The insert may also have one or protrusions extending from the outer perimeter of the self-supporting continuous structure in the direction of corners of the cavity having acute angles, thereby assisting in complete sealing or filling of such corners. The expandable filler inserts of the present invention are surprisingly effective in achieving full blockage or sealing of cavities, despite their lack of a carrier or holding jig. At the same time, such inserts are relatively simple and inexpensive to manufacture.

In yet another aspect, there is provided a method for producing such expandable filler inserts wherein the polymer matrix is contour extruded into an extruded strand, in special embodiments into an extruded closed tube having a cross-sectional shape corresponding to the desired dimensions of the self-supporting continuous structure, with the extruded strand or tube then being cut into the desired thickness.
Figure 1 shows a vehicle pillar containing a cavity.
Figure 2 shows an expandable filler insert in accordance with the invention adapted for insertion within the cavity of the vehicle pillar of Figure 1.
Figure 3 shows the expandable filler insert of Figure 2 secured in position within the cavity of the vehicle pillar of Figure 1.
Figure 4 shows an expandable filler insert in accordance with the present invention located within a pillar having narrow irregular corners, the insert having protrusions that extend towards the narrow irregular corners.
Figure 5 shows an expandable filler insert in accordance with the invention having a protrusion that projects into the interior space of the self-supporting continuous structure.
Figure 6 shows another embodiment of an expandable filler insert according to the present invention, having a main body 1a and a fixing element 2a that comprises undercut latching hooks 3a. The shaped part is viewed in the direction of the longitudinal axis, i.e, perpendicular to the two parallel delimiting surfaces. The main part and the fixing element are compact and are made of the same reactive material.
Figure 7 resembles figure 6. The fixing element 2a now comprises a cavity 4a that extends parallel to the longitudinal axis and opens into the two parallel delimiting surfaces.
Figure 8 shows a shaped part corresponding to Figure 6, which here comprises an internal cavity 4a that extends into fixing element 2a. The shaped part comprises a wall 5a that is made of the reactive material and has a different thickness when viewed in different directions perpendicular to the longitudinal axis.
Figure 9 shows a shaped part according to the present invention having a spacer 6a, an inner cavity 4a, a wall 5a made of reactive material (from which spacer 6a is also made), and a strip 7a made of a tacky substance. As shown in Figures 6 to 8, the shaped part is viewed along its longitudinal axis, i.e. perpendicular to the two parallel delimiting surfaces.
Figure 10 is a perspective view of a shaped part corresponding to Figure 6, having a main body 1 a and a fixing element 2a that comprises undercut latching hooks 3a.

### DETAILED DESCRIPTION OF CERTAIN EMBODIMENTS OF THE INVENTION

The present invention provides for an expandable filler insert for filling or sealing a hollow space or cavity. Additionally, the present invention provides for an expandable filler insert for filling or sealing the hollow space or cavity of.a vehicle pillar. The present invention also provides for a method for making an expandable filler insert by contour extrusion molding (also referred to as profile molding).

In an embodiment of the present invention, an expandable filler insert is provided which is used for filling and/or sealing a cavity such as, for example, the cavity or hollow structure of a pillar of a vehicle such as an automobile. The expandable filler insert comprises a self-supporting continuous structure having an interior space, the structure being comprised of a polymer matrix containing a) at least one polymer and/or polymer precursor and b) at least one latent blowing agent.

The continuous structure is a structure that is fabricated as a single continuous piece optionally having an interior space (i.e., an opening, which in certain embodiments represents at least about 50% or at least about 60% or at least about 70% or at least about 80% of the total area of the expandable filler insert as viewed from the direction which is perpendicular to the plane defined by the self-supporting continuous structure). The continuous structure in this case has an inner surface (which faces towards the interior space) and an outer surface (which faces towards the interior surface of the hollow member within which the insert will be placed) and is self-supporting (i.e., the expandable filler insert does not contain a separate carrier, holding jig or other support to which the polymer matrix is attached, other than the fixing element in one embodiment of the invention). The outer surface of the structure has a shape that in outline corresponds to and generally follows or parallels the cross-sectional shape of the cavity to be filled. In one embodiment, the continuous structure is resilient By resilient, it is meant that the continuous structure (at room temperature, e.g., 15-30 degrees C) is capable of being temporarily flexed, deformed or distorted to at least some extent without breaking or cracking when subjected to an external force such as twisting or squeezing, but returns to its original shape when such external force is released. This characteristic facilitates handling and placement of the expandable filler insert within a cavity of a structural member such as a vehicle pillar or the like. The continuous structure is preferably fabricated of a polymer matrix that is sufficiently rigid so as to render the continuous structure dimensionally stable and self-supporting.

In certain embodiments of the invention, the self-supporting continuous structure takes the form of a ring. The dimensions and shape of the ring in cross-section (i.e., a cross-section in a plane perpendicular to the plane defined by the self-supporting continuous structure) are not believed to be particularly critical, but generally should be selected so as to provide sufficient polymer matrix such that when the latent blowing agent contained therein is activated by heating, complete or essentially complete sealing of the cavity is attained. Additionally, the dimensions and shape of the ring in cross-section should be selected so as to render the continuous structure self-supporting. In cross-section, the ring may, for example, be in the form of a circle, oval, square, rectangle, polygon, triangle, cross, "U", "V", "D", "T", "X", "C" or the like or may be irregular in shape. Typically, the average thickness of the ring (as viewed from the direction that is perpendicular to the plane defined by the self-supporting continuous structure) is less than 50% or less than 40% or less than 30% or even less than 20% of the average overall radius of the self-supporting continuous structure.

The expandable filler insert may be secured within the hollow space or cavity of, for example, a vehicle pillar by a fixing element that protrudes from and which preferably is integral with the outer surface of the continuous structure. "Integral with", as used herein, means that the fixing element is part of the continuous structure and cannot be removed or separated therefrom without damaging the continuous structure of the expandable filler insert. In another embodiment, described further below, the expandable filler insert is fixed onto the inner cavity wall by a piece of a tacky substance.

In one embodiment of the invention, the expandable filler insert is formed entirely from the polymer matrix. The fixing element(s) are in the form of engaging projections that are capable of being inserted through openings in the cavity walls but are designed to resist being withdrawn through such openings (for example, by engagement of hooks or ridges on the projections with the exterior surface of the structural member wall in the vicinity of the opening), thereby securing the expandable filler insert in place. The fixing element is comprised of polymer matrix so that upon activation by heating the fixing element expands and helps to fill and seal off the opening in the cavity wall into which it has been inserted.

Any of the devices known in the art to be capable of securing a carrier bearing an expandable material to the interior wall of a structural member cavity may also be adapted for use as a fixing element in the expandable filler inserts of the present invention. For example, the fixing element may include two or more resiliently deflectable barbs configured for secured receipt in an opening in the structural member. Each barb may comprise a shank bearing a retaining piece that protrudes at an angle to the shank so as to form a hook. Such a fixing element is inserted into the wall opening with application of minor force, causing the barbs to reversibly bend together and towards each other. After the barbs have passed through the opening, they return to their normal position apart from each other. This allows the retaining pieces to engage with the outer surface of the structural member wall around the periphery of the opening. Affixing the insert in this manner so as to prevent it from being easily displaced is highly desirable, since otherwise the handling that the structural member will normally encounter during assembly of a vehicle prior to heating and activating the polymer matrix is likely to cause the expandable filler insert to no longer be properly positioned in the desired location within the cavity. Alternatively, the fixing element may be comprised of a post portion and a pair of resilient retaining leg members, each diverging from a respective side of the post portion at an acute angle and extending from the tip of the post portion towards the self-supporting continuous structure. When inserted into an opening in an interior wall of a pillar or other hollow structural member, the leg members are initially compressed and, upon full insertion, extend out beyond the opening and thereby engage the exterior surface of the pillar or other hollow structural member. Other types of fixing elements may also be used for this purpose, including for example a "Christmas tree"-type fastener having an elongated portion with multiple angled flanges. The expandable filler insert may have one fixing element or a plurality of fixing elements, of the same type or different types.

Typically, the fixing element projects radially from the self-supporting continuous structure. For example, the fixing element may project from the outer surface of the self-supporting continuous structure.

When the expandable filler insert is to be attached to a wall of a structural member, for example, at least a portion of the fixing element is inserted into an opening of the wall that is sized to substantially match said portion of the fixing element. The shape of the opening is not particularly critical, provided it is capable of receiving the fixing element and interacting with the fixing element so as to hold the expandable filler insert in the desired position. Typically, the expandable filler insert will be mounted within the cavity such that the plane defined by the self-supporting continuous structure is substantially perpendicular to the longitudinal axis of the vehicle pillar or other hollow structural member.

The fixing element has the same composition as the polymer matrix and be formed from the polymer matrix when the expandable filler insert is fabricated. The expandable filler insert after being attached within a vehicle cavity using the fixing element(s) is activated by heating for a period of time sufficient to foam and expand the polymer matrix, thus blocking or sealing the cavity so as to leave no spaces or holes therein.

The polymer matrix utilized in the expandable filler insert of the present invention may be selected from any of the materials known in the art that contain one or more polymers and/or polymer precursors and one or more latent blowing agents and that have sufficient dimensional stability at ambient temperatures so as to permit a continuous structure prepared therefrom to be self-supporting. It is also highly desirable for the polymer matrix (or at least its outer surface) to be substantially non-tacky at ambient temperatures and yet capable of being softened or melted at an elevated temperature so that it can be shaped or formed into the desired configuration by contour extrusion molding without activating the latent blowing agent(s). In a desirable embodiment of the invention, the polymer matrix is resilient. The latent blowing agent is selected to provide the property of foaming and expanding the polymer matrix by application of external heating (e.g., temperatures of from about 120°C to about 220°C, the range of temperatures typically encountered by an automobile body when the finish coatings are baked onto the body) for from about 10 minutes to about 150 minutes. The polymer may be a thermoplastic polymer, rubber (elastomer, including crosslinkable or curable elastomers), and/or thermoplastic elastomer. Suitable thermoplastic polymers include, for example, ethylene-vinyl acetate copolymers, copolymers of ethylene and alkyl (meth)acrylates, polyethylenes, polypropylenes, polyesters, . Suitable rubbers and thermoplastic elastomers include, for example, styrene-butadiene rubbers (SBR), ethylene-propylene rubbers, ethylene-propylene-diene monomer rubbers (EPDM), polybutadienes, styreneisoprene-styrene block copolymers, styrene-butadiene-styrene block copolymers, styrene-ethylene/butylene-styrene block copolymers, styrene-ethylene/propylene block copolymers, nitrile rubbers, chlorinated polyethylene rubbers, and the like. Polymer precursors, i.e., materials or substances including prepolymers, resins and the like that are monomeric or oligomeric in character that are capable of being cured, cross-linked and/or chain extended upon heating, may also be used, both by themselves as well as in combination with one or more polymers. Examples of suitable polymer precursors include, without limitation, epoxy resins, polyurethane prepolymers, and the like. The polymer matrix thus may be thermoplastic, thermosettable, or, in one especially desirable embodiment, both thermoplastic and thermosettable (i.e., capable of being shaped or molded at a moderately elevated temperature but also capable of being cured or crosslinked at a higher temperature).

The latent blowing agent or agents present in the polymer matrix causes expansion or foaming of the polymer matrix when heated to an elevated temperature. The latent blowing agent can be any known blowing agent known in the art, such as, for example, "chemical blowing agents" which liberate gases by decomposition upon heating and/or "physical blowing agents", i.e., expanding hollow beads that expand in volume upon heating (also referred to as expandable microspheres). Combinations of different blowing agents may be used, for example, a blowing agent having a lower activation temperature (e.g., about 100°C) may be used together with a blowing agent having a higher activation temperature (e.g., about 180°C). The amount of latent blowing agent is selected so as to provide the desired volume expansion of the polymer matrix when heated to a temperature effective to activate the blowing agent. The amount of latent blowing agent typically is from about 5 weight percent to about 20 weight percent of the total polymeric matrix.
Examples of latent blowing agents that are considered "chemical blowing agents" can include, but are not limited to, azo, hydrazide, nitroso and carbazide materials such as, for example, azobisisobutyronitrile, modified or unmodified azodicarbonamide (ADCA), di-nitroso-pentamethylenetetramine, 4,4'-oxybis(benzenesulfonic acid hydrazide) (OBSH), azocyclohexyl nitrile, azodiaminobenzene, benzenesulfonyl hydrazide, calcium azide, 4,4'-diphenyldisulfonylazide, diphenyl-sulfone-3,3'-disulfohydrazide, benzene-1,3-disuffohydrazide, trihydrazinotriazine, p-toluene sulfonyl hydrazide and p-toluenesulfonyl semicarbazide.
"Chemical blowing agents" may be used in combination with additional activators or accelerators such as zinc materials (e.g., zinc oxide, zinc stearate, zinc di-toluene sulfinate), magnesium oxide, (modified) ureas and the like. Various acid/(bi)carbonate mixtures may also be utilized as the latent blowing agent.

Examples of latent blowing agents that are considered "physical blowing agents" include, but are not limited to, expandable hollow microspheres wherein the hollow microspheres are based on polyvinylidene chloride copolymers or acrylonitrile/(meth)acrylate copolymers and contain encapsulated volatile substances such as, for example, light hydrocarbons or halogenated hydrocarbons.

Depending on the amount and type(s) of blowing agent(s) used in the polymer matrix as well as other factors (e.g., the presence of foaming accelerators/activators, the properties of the polymer(s)/polymer precursor(s)), the polymer matrix can be formulated to expand when heated at least about 500 percent, or at least about 1000 percent, or at least about 1500 percent, or at least about 2000 percent in volume, as compared to the initial volume of the polymer matrix.

Additionally, additives known in the art such as, for example, cross-linking agents, curatives, and the like may be added to the polymer matrix to promote curing and/or cross-linking of the polymers or polymer precursors. Such cross-linking agents and curatives are selected based on the type(s) of polymers or polymer precursors that are utilized in the polymer matrix. In preferred embodiments of the invention, the cross-linking agent(s) and/or curative(s) are latent, i.e., stable/unreactive at ambient temperatures but activated when the polymer matrix Is heated to an elevated temperature. In such embodiments, the polymer matrix is both expanded and cross-linked/cured as a result of such heating. The types of cross-linking agent(s)/curative(s) employed are generally selected so as to be compatible with the other components of the polymer matrix, in particular the polymer(s) and polymer precursor(s).
Additives known in the art, such as, for example, stabilizers, stiffeners, fillers, softeners, plasticizers, waxes, age resisters, antioxidants, pigments, colorants, fungicides, tackifiers, waxes and/or flame retardants may also be added to the polymer matrix.

Suitable waxes include paraffinic waxes having melting temperatures of from about 45°C to about 70°C, microcrystalline waxes with melting temperatures of from about 60°C to about 95°C, synthetic Fisher-Tropsch waxes with melting temperatures of from about 100°C to about 115°C, and polyethylene waxes with melting temperatures of from about 85°C to about 140°C.

Any antioxidants and stabilizers as known in the art can be added to the polymer matrix such as, for example, sterically hindered phenols and/or thioethers and/or sterically hindered aromatic amines.

Any fillers as known in the art can be present in the polymer matrix, such as, for example, talc, calcium carbonate, clay, silica, alumina, glass beads, glass fibers, polymeric fibers, barium sulfate, mica, carbon black, calcium-magnesium carbonates, barite and silicate fillers, potassium aluminum silicate, calcium metasilicates, pumice, and organic fillers. The amount of filler may, for example, be from about 1 weight percent to about 20 weight percent of the polymer matrix.

Formulations that may be adapted for use in fabricating the self-supporting continuous structure of the present invention include, for example, the formulations described in various patents and published patent applications such as, for example, US 2005-0096401; US 6830799; US 6281260; US 2004-0221953; US 5266133; US 5373027; US 7084210; US 5160465; US 5212208; US 6573309; US 2004-0266898; US 6150428; US 5708042; US 5631304; US 5160465; US 2004-0266899; US 2006-0188726 and US 5385951, each of which is incorporated herein by reference in its entirety.

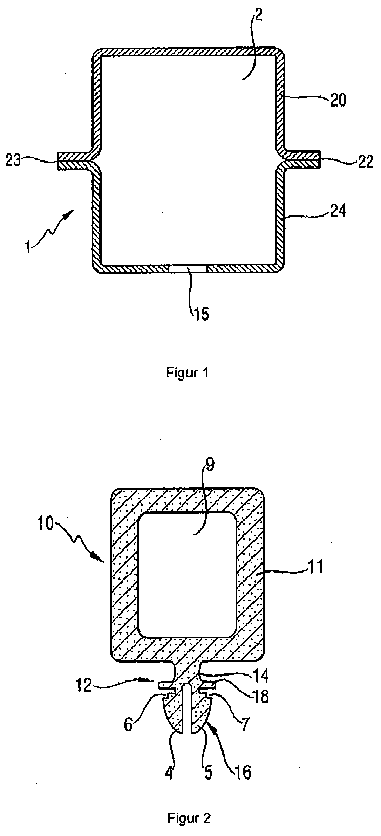

Figure 1 illustrates in cross-section a vehicle pillar (1) having a cavity (2) within the vehicle pillar (1). The vehicle pillar (1) is comprised of an inner pillar part (24) that is secured to an outer pillar part (20) at fixing points (22) and (23) using a fixing means such as metal bolts, welding, adhesive or the like. The inner pillar part (24) contains an opening (15) into which a fixing element (12) of the expandable filler insert (10) will be inserted. The inner pillar part (24) and outer pillar part (20) may, for example, be fabricated from metal sheet stock, using forming methods well-known in the art.

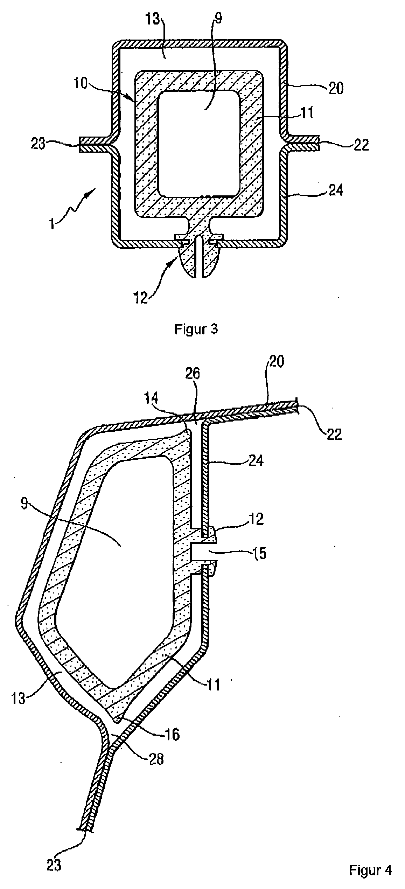

Figure 2 shows an expandable filler insert (10) in accordance with the present invention adapted for placement within the cavity (2) of the vehicle pillar (1) shown in Figure 1, it being understood that such placement may conveniently be carried out prior to assembly of the inner pillar part (24) and outer pillar part (20) to form the vehicle pillar (1). The insert (10) comprises a self-supporting continuous structure (11) having a predetermined shape and dimensions that correspond to the shape and dimensions of the cavity (2) to be filled/sealed, but that provide for a gap (13) (as illustrated in Figure 3) between the outer surface of the self-supporting continuous structure and the interior surface of the cavity (2) that preferably is substantially uniform. The fixing element (12) of the expandable filler insert (10) is an attachment clip comprising a post portion (14) and a flexible clip portion (16) wherein the clip portion (16) is inserted into or through the opening (15) of the inner pillar part (24). The post portion (14) of the fixing element (12) has a shoulder (18) that is larger than the opening (15) of the inner pillar part (24) so that it presses against an interior surface of the inner pillar part (24) and which, in combination with the clip portion (16), secures the insert (10) in place. The clip portion (16) may have two barbs (4) and (5) which may be resiliently deflected towards each other to facilitate insertion of the clip portion (16) into the opening (15). Each barb (4, 5) may contain a notch (6, 7) that further helps secure the expandable filler insert (10) in the desired position and orientation within the cavity (2). The fixing element (12) is integral with and comprised of the same polymer matrix as the self-supporting continuous structure (11), thereby simplifying production of the expandable filler insert (10) and also assisting in assuring that the opening (15) is filled by the foam generated upon activation of the polymer matrix. The fixing element (12) as shown in Figures 2 and 3 allows the expandable filler insert (10) to be held in place, the shoulder portion (18) keeping the outer surface of the self-supporting continuous structure (11) from coming into contact with the inner surface of the cavity to be filled/sealed (except at the point of attachment) thereby creating a gap (13) between the self-supporting continuous structure (11) and the surrounding interior walls of the pillar (1). This gap (13) permits liquids such as cleaners, pretreatments, conversion coatings, primers, paints and the like to be introduced into the cavity after insertion of the expandable filler insert, contacted with essentially the entire interior surface of the cavity, and then removed. The insert (10) can instead be secured to the outer pillar part (20) with a fixing element (12) in much the same way as the inner pillar part (24) and/or may be secured to both the inner pillar part (24) and outer pillar part (20). A plurality of fixing elements may be employed in combination with a plurality of openings in the walls of the vehicle pillar, if so desired.

The assembly of the vehicle pillar (1) and expandable filler insert (10) illustrated in Figure 3 is subjected to external heating (e.g., a temperature of from about 120°C to about 210°C) for an amount of time sufficient to cause the polymer matrix forming the self-supporting continuous structure (11) to foam and seal off the cavity (2) of the vehicle pillar (1). In particular, the gap (13) between the outer surface of the self-supporting continuous structure and the interior surface of the pillar as well as the interior space (9) of the initial expandable filler insert (10) become filled with the foam generated from the polymer matrix. The opening (15) in the inner pillar part (24) is also closed off and sealed by the expanded polymer matrix.

Figure 4 shows an expandable filler insert within an assembled vehicle pillar that has narrow irregular corners (26, 28).The outer surface of the self-supporting continuous structure (11) contains protrusions (14, 16) that extend towards the narrow irregular corners (26, 28) of the pillar, thus allowing the corners (26, 26) as well as the interior of the cavity to be sealed once the polymer matrix is activated by heating. A narrow irregular corner consistent with the present invention is any corner having an acute angle.

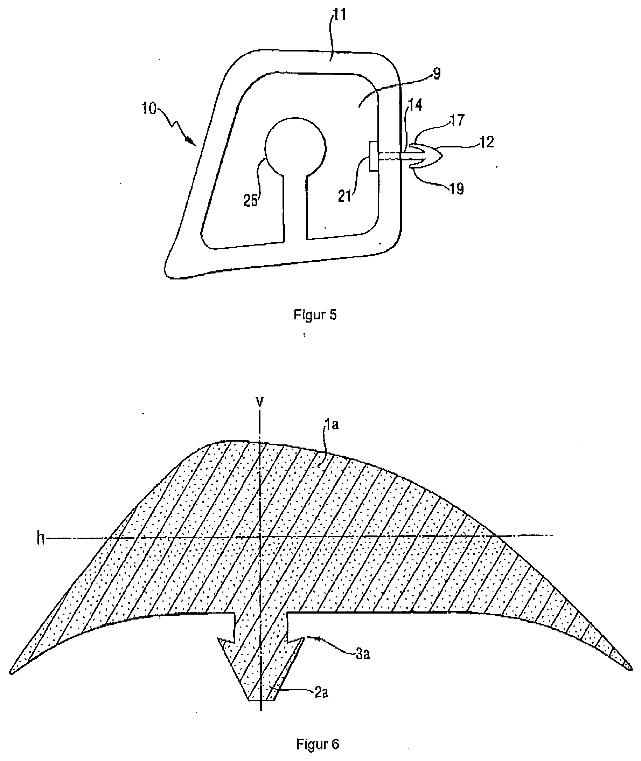

Figure 5 shows an embodiment of the present invention wherein the expandable filler insert (10) has a protrusion (25) that projects into the interior space (9) of the self-supporting continuous structure. When the expandable filler insert (10) is activated by heating to foam and expand the polymer matrix, the protrusion (25) aids in fully sealing the cavity.

In certain embodiments of the invention, the expandable filler insert may be produced by a contour extrusion molding process. An extrusion machine (extruder) extrudes the polymer matrix in molten or softened form through a die assembly. In the case that an expandable filler insert having an interior space is desired, the die assembly includes a member to which an end plate is secured by fasteners. A profile plate having a desired cross-sectional shape is disposed between the member and the end plate. The shape of the opening in the profile plate defines the cross-section of the closed tube of polymer matrix that will be extruded. For example, a die with an annular exit cross section may be utilized to mold the extruded polymer matrix into the desired hollow shape. Any of the techniques and equipment known in the art of extrusion molding of hollow tubes, pipes and other such shapes may be adapted for use in the present invention. For example, the die assembly may comprise a center-fed mandrel-support die (also sometimes referred to as a spider-supported mandrel die or supporting ring die) wherein the molten polymer matrix is divided in the region of the mandrel support into separate streams. The molten polymer matrix flows around the spider legs. A screen-pack die (also referred to as a breaker-plate die) may also be used wherein the mandrel is held by a tubular perforated body screen pack. Yet another type of die assembly that can be used is a side-fed mandrel die (also called a cross-head die). When a side-fed mandrel die is employed, the molten polymer matrix is passed around the mandrel by way of a manifold. Spiral-mandrel dies may also be utilized in which spiral-shaped mandrels wind around the mandrel in the form of a multiple thread. A cooling fixture may be used in conjunction with the extrusion machine to lower the temperature of the hot extruded closed tube of polymer matrix until it is sufficiently solidified to retain the desired shape. The extruded closed tube is cut to the desired length/thickness to provide the self-supporting continuous structure of the expandable filler insert. Generally speaking, the extruded closed tube may be cut in a direction substantially perpendicular to the longitudinal axis of the extruded closed tube using any suitable method such as a hot knife, saw or other such device.

Furthermore, the profile plate may be changed to produce a tube of different diameter or cross-sectional shape. In one embodiment of the invention, for example, the cross-sectional shape includes one or more protrusions having the desired cross-sectional shape of the fixing elements so that when the extruded closed tube is cut one or more fixing elements integral with the self-supporting continuous structure are provided. As an alternative to a hollow tube, a massive strand of the expandable material may be contour extruded and then cut into the desired pillar filler inserts.

Other embodiments of the present invention may be described as follows. In these embodiments, the term "shaped part" is used synonymously with the term "expandable filler insert" used herein before.

Thus, in a further embodiment, the present invention relates to a shaped part having a main body made of a reactive cross-linking material as described above, which body comprises at least one fixing element having respectively a front side and a back side which are defined in that the entire shaped part, including the fixing element or elements, is delimited by two parallel flat surfaces, the front side of each fixing element lying in one of the parallel surfaces, and the back side lying in the other of the parallel surfaces.

It is provided according to the present invention that the entire shaped part, including all fixing elements, be delimited by two parallel flat surfaces. For manufacturing reasons, however, slight deviations from the parallelism of the two surfaces may exist. The two surfaces are, however, intended at least to lie in approximately parallel fashion to the extent that they form an angle of at most 10°, by preference at most 5°, with one another. These two (approximately) parallel surfaces therefore delimit not only the main body of the shaped part, but also all fixing elements and/or spacers that are present. In other words: viewed in a direction parallel to the two parallel delimiting surfaces, the entire shaped part, including fixing elements, exhibits neither projections nor setbacks with respect to the two parallel delimiting surfaces.

The direction that extends perpendicular to the two parallel surfaces will be referred to hereinafter as the longitudinal direction, and a corresponding axis as the longitudinal axis. This is independent of the extension possessed by the shaped body in the direction of said longitudinal axis.

In directions perpendicular to the longitudinal axis, the shaped part can be delimited by arbitrarily shaped surfaces, with the restriction that all surfaces other than the two delimiting surfaces located perpendicular to the longitudinal axis run parallel to the longitudinal axis. Once again, small deviations from parallelism may occur for manufacturing reasons, although these deviations are to be no greater than 10°, by preference no greater than 5°, Alternatively, the shaped part according to the present invention, including fixing elements, can be described in such a way that it substantially comprises two parallel delimiting surfaces, and that all other delimiting surfaces can be arbitrarily shaped, but are substantially perpendicular (with maximum deviations of 10°, by preference of 5°) to the aforesaid parallel surfaces. This further includes the fact that the delimiting surfaces other than the two aforesaid parallel surfaces extend in flat fashion in the direction of the longitudinal axis, i.e. exhibit no elevations or depressions in that direction. This can also be expressed by saying that any line that lies on a delimiting surface other than the aforesaid two parallel surfaces and extends in the direction of the longitudinal axis is a straight line. All edges that are formed by delimiting surfaces that extend perpendicular to the two aforesaid parallel surfaces correspondingly extend as straight lines parallel to the longitudinal axis.

At temperatures below 70°C, the shaped part according to the present invention is solid and self-supporting, i.e. its shape does not change under the influence of its own weight. The shaped part does not comprise a support element on which the reactive material abuts. Reinforcing elements, selected from fibers, fabrics, or nets, can nevertheless be embedded into the reactive material. These reinforcing elements can be made, for example, of glass, plastic, metal, rock wool, or carbon fibers. For manufacturing reasons, fabrics or nets are embedded into the shaped part so that they lie largely parallel to the longitudinal axis of the shaped body. Fibers can also run obliquely with respect to the longitudinal axis, but exhibit a definite preferred orientation in the direction of the longitudinal axis.

When looking in plane view onto the two parallel delimiting surfaces, i.e. in the direction of the longitudinal axis, the main body of the shaped part generally exhibits an irregular cross section, which results from the fact that the cross section is adapted to the cross section of the component cavity that is to be insulated or reinforced. The shaped part therefore generally has different extensions in the various directions perpendicular to the longitudinal axis. It is possible in this context to define an axis that lies perpendicular to the longitudinal axis and points in the direction of the greatest extension of the shaped body. This axis is hereinafter referred to as the horizontal axis, and the corresponding direction as the horizontal direction. That axis that runs perpendicular to both the longitudinal axis and the horizontal axis is referred to as the vertical axis. A direction parallel to the vertical axis is referred to as the vertical direction. By definition, the non-expanded shaped part has less of an extension in the vertical direction than in the horizontal direction. Viewed in the direction of the longitudinal axis, the shaped body can be thicker or thinner than in the horizontal or vertical direction. In particular, the shaped part can be relatively flat and disk-shaped in the longitudinal direction. For example, the shaped part can be at least three times as wide in the horizontal direction as it is thick in the direction of the longitudinal axis.

The geometrical limit case can, however, also exist in which the horizontal direction cannot be distinguished from the vertical direction, since two directions of greatest extension are present that are perpendicular to one another. This geometrical limit case will, however, seldom occur in practice. Figure 6 shows an embodiment of a shaped part 1a according to one embodiment of the present invention viewed in the direction of the longitudinal axis. The viewer is therefore looking perpendicularly onto one of the two parallel delimiting surfaces. In this exemplifying embodiment, the shaped part is made up of a main body 1 a and a fixing element 2a that comprises undercut latching hooks 3a. The horizontal and vertical axes as defined above are drawn with dashed lines, and labeled with the letters h and v, respectively. The fact that fixing element 2a lies parallel to the vertical axis in this embodiment is accidental. Fixing element 2a can in fact point in any arbitrary direction and protrudes from the main body at any arbitrary point.

As Figure 6 shows, the shaped part can be configured in such a way that its delimiting surfaces extending parallel to the longitudinal direction extend only very slightly parallel, or not at all parallel, to the horizontal or vertical axis. The shaped part can be angled arbitrarily relative to the horizontal or vertical axis, and can taper in a wedge shape as indicated in Figure 6. The regions of the shaped body that taper in wedge-shaped fashion can extend into correspondingly pointed corners of the cavity to be reinforced or insulated, and can fill up said corners particularly well after thermal expansion ("foaming").

As explained herein before, a filler insert or shaped part according to the present invention can be manufactured in particularly favorable fashion by extruding the reactive material through a correspondingly shaped die to produce a strand, and by slicing said strand, perpendicular to the extrusion direction, in such a way that approximately parallel cut surfaces are produced. This extrusion operation imparts to chain-shaped molecules of the reactive material a statistical preferred direction in the direction of the longitudinal axis of the shaped body. As a consequence of the packing of the chain-shaped molecules that is thereby produced, a shaped part according to one embodiment of the present invention shrinks by no more than 10% in the horizontal direction and the vertical direction when heated to a temperature in the range of 70 to 100°C. This shrinkage is by preference less than 5%, in particular less than 3%, based in each case on the extension in the corresponding direction prior to heating from 20°C to 70 100°C. This behavior is desirable, since as a result the shaped body remains largely geometrically stable upon heating, before foaming and crosslinking begin at even higher temperature.

The same mechanism of the preferred orientation of chain-shaped molecules in the extrusion direction further causes the shaped part according to the present invention to expand, upon heating to 120 to 220°C, in such a way that the expansion in the vertical direction is greater than the expansion in the direction of the longitudinal axis, considered in each case relative to the material thickness in the corresponding direction. This also applies to the expansion in the vertical direction as compared with the horizontal direction, so that a shaped part according to the present invention expands, upon heating to 120 to 220°C, in such a way that the expansion in the vertical direction is greater than the expansion in the horizontal direction, once again considered, in each case, relative to the material thickness in the corresponding direction.

The relatively greater expansion in the direction perpendicular to the longitudinal axis is particularly desirable, since the expansion in the direction perpendicular to the longitudinal axis extends in a direction toward the walls of the cavity to be reinforced or insulated.

The shaped part is dimensioned so that in the non-expanded state, it does not completely fill up the cavity cross section. Leaving aside those locations at which the shaped part must have contact with the cavity walls for immobilization, a flow gap approximately 1 to approximately 10 mm wide remains between the outer surface of the shaped part and the inner delimiting walls of the cavity. As long as the shaped part is not expanded, treatment and coating fluids can flow freely through this flow gap. Only as a result of thermal expansion does the volume of the shaped part increase in such a way that the shaped part abuts conformingly everywhere against the inner walls of the cavity and thus completely seals the cavity or stiffens the cavity walls. This expansion is accomplished by heating to a temperature in the range of 120 to 220°C for a time period in the range between 10 and 150 minutes.

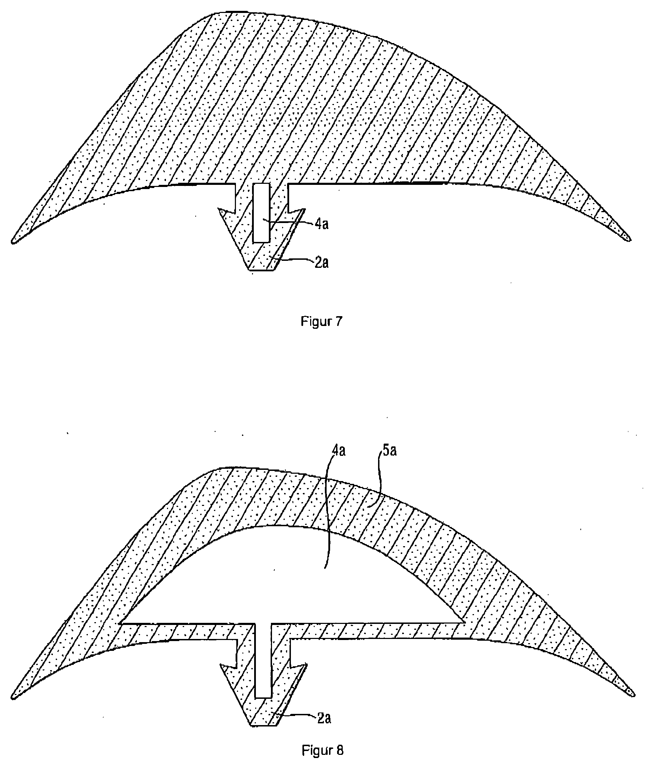

As depicted in Figure 6, the entire shaped part including the fixing element or spacer can be compact, i.e. can exhibit no interior space ("cavities") detectable by the naked eye. The main body and/or fixing elements can, however, also comprise internal cavities, which allow economization of material. One embodiment of this is depicted in Figure 7. Here the main body is compact, i.e. contains no cavity, whereas fixing element 2a comprises an internal cavity 4a. In this embodiment of the invention, therefore, at least one fixing element comprises a cavity that extends parallel to the longitudinal axis from one of the parallel surfaces to the other, and opens into said surfaces The delimiting surfaces of said cavity can extend parallel to the external surfaces of the spacer or of the fixing element The cavity can, however, also have a shape that is independent of the external contour of the fixing element. This embodiment is depicted by way of example in Figure 7.

In a further embodiment, the main body itself can comprise an interior space or cavity or several cavities that extend(s) parallel to the longitudinal axis from the one to the other of the parallel surfaces, and open(s) into said surfaces. This embodiment is depicted by way of example in Figure 8, where the main body comprises a cavity 4a that extends into fixing element 2a. The cavity can, however, be confined to the main body and not extend into a fixing element. In this case the fixing element are compact, whereas the main body comprises a cavity.

In this embodiment, the reactive material is confined to a wall 5a that is delimited internally by the delimiting surfaces of cavity 4a and externally by the external delimiting surfaces of the shaped body. This wall can be of identical thickness in every direction perpendicular to the longitudinal axis. In this case the internal and external delimiting surfaces of wall 5a extend in parallel fashion. Figure 8, however, depicts a generalized embodiment according to which cavity wall 5a has a different thickness in different directions perpendicular to the longitudinal axis. The cavity-side delimiting surfaces of wall 5a then do not extend parallel to the external delimiting surfaces of the shaped body. This embodiment has the advantage that the quantity of reactive material can be distributed differently over the cross section of the component cavity to be reinforced or insulated. In the specific example of Figure 8, for example, a particularly large quantity of reactive material is located in the vicinity of the regions that taper in wedge-shaped fashion. This makes available sufficient expandable and reactive material to completely fill up regions of the component cavity to be reinforced or insulated that taper to a point Figure 8 depicts, by way of example, an embodiment in which the main body comprises only a single cavity 4a. In a further embodiment not depicted here, however, said cavity can be divided by partitions into multiple cavities that all extend parallel to the longitudinal axis of the shaped body.

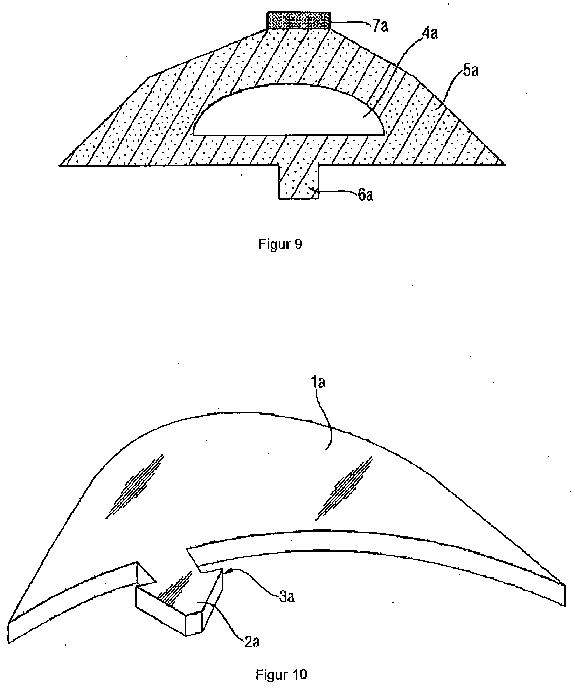

In a preferred embodiment, the expandable material of the shaped part according to the present invention is not tacky in the non-expanded state at a temperature in the range of 10 to approximately 40°C. This facilitates transport and handling of the shaped parts. Provision can also be made, however, for a portion of the surface of the shaped part to be tacky in the aforesaid temperature range, so that the shaped part can be adhesively fastened, with said tacky surface segment, onto the inner wall of the cavity that is to be reinforced or insulated. Mechanical fixing elements such as clips are then not necessary. This embodiment is therefore characterized in that the otherwise non-tacky shaped part comprises at least one outer surface that extends from the one to the other of the parallel surfaces and is covered, at least in a selected region of said outer surface, by a material that is tacky at 10 to 40°C, this selected region being delimited on two sides by the two parallel surfaces. This embodiment is depicted schematically in Figure 9. This Figure shows a shaped part having a compact spacer 6a, an internal cavity 4a, a wall 5a made of reactive expandable material, and a strip 7a of a material that is tacky at 10 to 40°C. The shaped part is once again viewed parallel to the longitudinal axis, The viewer is therefore looking at the end face of strip 7a of the tacky material.

Possible compositions of the expandable material (comprising at least one polymer or polymer precursor and at least one latent blowing agent) have been described herein before.

In order to establish a desired viscosity for the extrusion process, the reactive material can contain reactive thinners. Reactive thinners for the purpose of this invention are low-viscosity substances (glycidyl ethers or glycidyl esters) containing epoxy groups and having an aliphatic or aromatic structure. These reactive thinners serve on the one hand to lower the viscosity of the binder system above the softening point, and on the other hand they control the pre-gelling process in injection molding. Typical examples of reactive thinners to be used according to the present invention are mono-, di- or triglycidyl ethers of C6 to C14 monoalcohols or alkylphenols, as well as the monoglycidyl ethers of cashew-shell oil, diglycidyl ethers of ethylene glycol, diethylene glycol, triethylene glycol, tetraethylene glycol, 1,2-propylene glycol, 1,4-butylene glycol, 1,5-pentanediol, 1,6-hexanediol, and cyclohexanedimethanol, triglycidyl ethers of trimethylolpropane, and the glycidyl ethers of C6 to C24 carboxylic acids, or mixtures thereof.

If the thermally expandable, hot-curable shaped bodies are to be used to manufacture specifically lightweight structures, they preferably contain, in addition to the aforementioned "normal" fillers, so-called lightweight fillers, which are selected from the group of the metal hollow spheres such as, for example, hollow steel spheres, hollow glass spheres, fly ash (fillite), hollow plastic spheres based on phenol resins, epoxy resins, or polyesters, expanded hollow microspheres having wall material made of (meth)acrylic acid ester copolymers, polystyrene, styrene-(meth)acrylate copolymers, and in particular of polyvinylidene chloride, as well as copolymers of vinylidene chloride with acrylonitrile and/or (meth)acrylic acid esters, hollow ceramic spheres, or organic lightweight fillers of natural origin such as ground nut shells, for example the shells of cashew nuts, coconuts, or peanut shells, as well as cork flour or coke powder. Those lightweight fillers that are based on hollow microspheres are particularly preferred; they ensure, in the cured shaped-body matrix, a high level of compressive strength for the shaped body.

The present invention further relates to a method for manufacturing a shaped part having the features and properties described above, the premixed expandable material preferably being extruded into a strand at a temperature above room temperature, and the strand being sliced so that the aforesaid parallel surfaces are produced as cut surfaces. The temperature of the expandable material during extrusion through the die is by preference in the range of approximately 70 to approximately 110°C. The expandable material can be extruded at a rate in the range of 1 to 15m/minute.

The reactive expandable material is extruded through a die whose opening is shaped so that a portion of the extruded strand of the material exhibits the cross section of the fixing elements and if present of the spacers. Upon slicing of this strand into the shaped parts according to the present invention, a portion of the extruded material then has the shape of the fixing elements and if present the spacers.

If it is desired that the shaped parts according to the present invention comprise the reinforcing elements recited previously, selected from fibers, fabrics, or nets, it is preferable to proceed as follows: The expandable material is extruded into a strand as described above, and the reinforcing elements, selected from fibers, fabrics, or nets, are pressed into said strand before it is sliced; the strand is then sliced in such a way that the parallel surfaces are produced as cut surfaces. Rollers, for example, can be used to press the reinforcing elements into the extruded strand.

A shaped part in which a selected region of its surface is covered with a material that is tacky at 10 to 40°C was described previously as a further embodiment of the shaped part according to the present invention, said selected region being delimited on two sides by the two parallel surfaces. A method for manufacturing a shaped body having these features preferably proceeds in such a way that the tacky material is co-extruded with the reactive material in such a way that a strip of the tacky material is formed on an outer surface of the extruded strand. Upon slicing of this strand in a fashion such that parallel cut surfaces are produced, the correspondingly embodied shaped body is obtained.

Alternatively thereto, however, only the reactive material can be extruded into a strand, and after extrusion into a strand but before it is sliced, a strip of the tacky material is applied onto the strand. This can be accomplished by a kind of laminating process using rollers.

The present invention furthermore encompasses a method for reinforcing, insulating, damping, and/or sealing hollow components, wherein a shaped part or expandable filler insert according to the present invention is fastened, before completion of the hollow component, to an inner wall of the hollow component, and the hollow component is closed and heated to a temperature in the range of 120 to 220°C, by preference for a time period in the range of 10 to 150 minutes.

The usual production process for elongated hollow structures in vehicle construction, for example for the frames that surround the passenger cell, is utilized for this method. These hollow structures are usually produced by manufacturing two correspondingly shaped half-shells from metal, and joining these half-shells together to yield the hollow frame structure or a portion thereof. Hollow structures or hollow supports of this kind are, for example, the A-, B-, or C-pillar of an automobile body that support the roof structure, or roof frames, sills, and parts of the wheel housings or engine supports. As is usual in the existing art with the use of so-called "pillar fillers" or "baffles" in hollow structures of this kind, the shaped part according to the present invention can be fastened, with the aid of a fixing element or a tacky surface portion, onto that surface of the one half-shell which will later become the inner wall of the cavity, before said half-shell is joined to the other half-shell to constitute the hollow structure. The shaped part is preferably shaped in such a way that its cross section (viewed perpendicular to the longitudinal axis) corresponds to the cross-sectional shape of the cavity. The shaped part is however, dimensioned so that prior to foaming, it is in contact with the inner wall of the hollow part at only one or a few points. Aside from these points, a flow gap having a width of approximately 1 to approximately 10 mm, by preference approximately 2 to approximately 4 mm, remains between the delimiting surfaces located parallel to the longitudinal axis of the shaped part and the inner walls of the hollow part. This flow gap ensures that the various process fluids with which the basic auto body is treated can wet every part of the inner sides of the cavity walls. The flow gap closes up only upon thermal expansion of the shaped body, with the result that the latter fulfils its purpose of reinforcing, insulating, damping, and/or sealing the hollow components. Spacers on the shaped parts can guarantee that this flow gap is reliably produced before foaming of the shaped body, and is maintained until foaming.

Lastly, in a further aspect, the invention relates to a vehicle having a hollow frame structure that contains the filer inserts or shaped parts described above after expansion and hardening thereof.

The herein described expandable filler inserts (or "shaped parts") of the present invention can be used in any location within an automotive vehicle frame. For instance, such locations include, but are not limited to, pillars (including A, B, C and D pillars), rails, pillar to door regions, roof to pillar regions, mid-pillar regions, roof rails, windshield or other window frames, deck lids, hatches, removable top to roof locations, other vehicle beltline locations, motor (engine) rails, lower sills, rocker panel rails, support beams, cross members, lower rails, and the like. In general, the expandable filler insert will be placed within a hollow structural member having a longitudinal axis so that the plane defined by the self-supporting continuous structure is substantially perpendicular to the longitudinal axis of the hollow structural member.

Although the expandable filler insert of the present invention has been described for use in the hollow spaces or cavities of vehicles such as automobile pillars, it also understood that the expandable filler insert offers advantages in any other applications where it is desired to seal or fill a hollow space or cavity (especially where the article of manufacture is subjected to a heating step during at least one assembly step). For example, the expandable filler insert can be used in products having hollow structural members other than vehicles, including, without limitation, aircraft, domestic appliances, furniture, buildings, walls and partitions, and marine applications (boats).

## Claims

1. An expandable filler insert (10) for filling a cavity (2) having an interior surface, said insert (10) comprising a self-supporting continuous structure (11), fabricated as a single continuous piece from a polymer matrix comprising at least one polymer or polymer precursor and at least one latent blowing agent, having an outer surface that substantially parallels the interior shape of the cavity (2) but is spaced apart from the interior surface of the cavity (2), and a fixing element (12, 2a) and wherein the fixing element (12, 2a, 7a) being either
- an integral part (12, 2a) of the continuous structure (11) protruding from the self-supporting continuous structure for securing the insert to the interior surface of the cavity (2), in the form of engaging projections that are capable of being inserted through openings (15) in the cavity walls, or
- a piece (7a) of a tacky substance
**characterized in that** the insert (11), including the fixing element is delimited by two basically parallel flat surfaces.

2. The expandable filler insert (10) of claim 1 wherein the two surfaces are intended to be basically parallel to the extent that they form an angle from 0° to 10° with one another

3. The expandable filler insert (10) of claim 1 or claim 2 wherein said insert (10) has an interior space (9) preferably realized by said self-supporting continuous structure (11) being a ring.

4. The expandable filler insert (10) of any of claim 1 to 3 having a main body made of a reactive cross-linking material including said polymer matrix comprising at least one polymer or polymer precursor and at least one latent blowing agent, that is expandable by at least 20% at a temperature in the range of 120 to 220°C, which body comprises at least one fixing element (12, 2a, 7a) having respectively a front side and a back side, the front side of each fixing element (12, 2a, 7a) lying in one of the parallel surfaces, and the back side lying in the other of the parallel surfaces.

5. The expandable filler insert (10) according to claim 4, wherein in the non-expanded state it extends farther in a first direction, perpendicular to a longitudinal axis that is perpendicular to the parallel surfaces, than in a second direction perpendicular to the longitudinal axis and perpendicular to the first direction, the first direction being the direction of farthest extension and being designated the horizontal direction, while the second direction perpendicular respectively to the longitudinal axis and to the horizontal direction is designated the vertical direction.

6. The expandable filler insert (10) according to claim 5, wherein upon heating to 120 to 220°C, it expands in such a way that the expansion in the vertical direction is relatively greater than the expansion in the direction of the longitudinal axis.

7. The expandable filler insert (10) according to one claim 5 tor 6, wherein upon heating to 120 to 220°C, it expands in such a way that the expansion in the vertical direction is relatively greater than the expansion in the horizontal direction.

8. The expandable filler insert (10) according to one of more of claims 1 to 7, wherein at least one fixing element (12, 2a, 7a) comprises a cavity (9) that extends parallel to the longitudinal axis from the one to the other of the parallel surfaces, and opens into said surfaces.

9. The expandable filler insert (10) according to one or more of claims 1 to 8, wherein the expandable material is not tacky at a temperature in the range of 10 to 40°C and wherein it comprises at least one outer surface that extends from the one to the other of the parallel surfaces and is covered, at least in a selected region of said outer surface, by a material that is tacky at 10 to 40°C, this selected region being delimited on two sides by the two parallel surfaces.

10. The expandable filler insert (10) of any of claims 1 to 3, wherein said outer surface of said self-supporting continuous (11) structure is dimensioned so as to form a substantially uniform gap (13) between said outer surface and the interior surface of said cavity around the perimeter of said self-supporting continuous structure (11) of from 1 to 10 mm.

11. The expandable filler insert (10) of any of claims 1 to 3, wherein the polymer matrix after heat activation expands by at least about 1000 percent.

12. The expandable filler insert (10) of any of claims 1 to 3 for filling a cavity (2) having a cross-sectional shape comprising at least one acute angle and having an interior surface, said insert (10) comprising a self-supporting continuous structure (11) having an interior space (9) and an outer surface that substantially parallels the cross-sectional shape of the cavity (2) but does not contact the interior surface of the cavity (2), wherein the outer surface of the self-supporting continuous structure (11) has at least one protrusion that extends towards the at least one acute angle of the cavity (2), a fixing element (12a, 2; 7a) protrudes from the self-supporting continuous structure (11) for securing the insert (10) to the interior surface of the cavity (2), and said polymer matrix comprises at least one polymer or polymer precursor and at least one latent blowing agent.

13. The expandable filler insert (10) of claim 12, said insert further comprising a protrusion comprised of the polymer matrix extending into the interior space of the self-supporting continuous structure (11).

14. A method for filling or sealing a cavity (2) having an interior surface, said method comprising attaching an expandable filler insert (10) in accordance with claim 1 to said interior surface and heating said expandable filler insert (10) to a temperature effective to activate said at least one latent blowing agent.

15. A vehicle having a hollow frame structure (1) that contains shaped parts according to one or more of Claims 1 to 9 after expansion and hardening thereof.

## Patentansprüche

1. Expandierbarer Füllereinsatz (10) zum Füllen eines Hohlraums (2) mit einer Innenfläche, wobei der Einsatz (10) eine selbsttragende durchgängige Struktur (11), die als ein einziges durchgängiges Stück aus einer Polymermatrix gefertigt ist, die mindestens ein Polymer oder einen Polymervorläufer und mindestens ein latentes Treibmittel umfasst, und die eine Außenfläche aufweist, die im Grunde der Innenform des Hohlraums (2) entspricht, jedoch von der Innenfläche des Hohlraums (2) beabstandet ist, und ein Fixierungselement (12, 2a) umfasst, und wobei das Fixierungselement (12, 2a, 7a) entweder
- ein integraler Teil (12, 2a) der durchgängigen Struktur (11), der von der selbsttragenden durchgängigen Struktur zum Sichern des Einsatzes an der Innenfläche des Hohlraums (2) hervorragt, in der Form von Eingriffsvorsprüngen, die durch Öffnungen (15) in die Hohlraumwände eingesetzt werden können, oder
- ein Stück (7a) aus einer klebrigen Substanz ist,
**dadurch gekennzeichnet, dass** der Einsatz (11), der das Fixierungselement beinhaltet, von zwei im Grunde parallelen ebenen Oberflächen begrenzt wird.

2. Expandierbarer Füllereinsatz (10) nach Anspruch 1, wobei die zwei Oberflächen dazu vorgesehen sind, im Grunde zu dem Ausmaß parallel zu sein, dass sie einen Winkel von 0° bis 10° miteinander bilden.

3. Expandierbarer Füllereinsatz (10) nach Anspruch 1 oder 2, wobei der Einsatz (10) einen Innenraum (9) aufweist, der vorzugsweise dadurch umgesetzt ist, dass die selbsttragende durchgängige Struktur (11) ein Ring ist.

4. Expandierbarer Füllereinsatz (10) nach einem der Ansprüche 1 bis 3, der einen Hauptkörper aufweist, der aus einem reaktiven Vernetzungsmaterial hergestellt ist, das die Polymermatrix beinhaltet, die mindestens ein Polymer oder einen Polymervorläufer und mindestens ein latentes Treibmittel umfasst, und das um mindestens 20 % bei einer Temperatur im Bereich von 120 bis 220 °C expandierbar ist, wobei der Körper mindestens ein Fixierungselement (12, 2a, 7a) mit jeweils einer Vorderseite und einer Rückseite umfasst, wobei die Vorderseite jedes Fixierungselements (12, 2a, 7a) in einer der parallelen Oberflächen liegt und die Rückseite in der anderen der parallelen Oberflächen liegt.

5. Expandierbarer Füllereinsatz (10) nach Anspruch 4, wobei er sich in dem nicht expandierten Zustand weiter in eine erste Richtung, die zu einer Längsachse senkrecht ist, die senkrecht zu den parallelen Oberflächen ist, als in eine zweite Richtung, die senkrecht zu der Längsachse ist und senkrecht zu der ersten Richtung ist, erstreckt, wobei die erste Richtung die Richtung der weitesten Erstreckung ist und als die horizontale Richtung bezeichnet wird, während die zweite Richtung, die jeweils senkrecht zu der Längsachse und zu der horizontalen Richtung ist, als die vertikale Richtung bezeichnet wird.

6. Expandierbarer Füllereinsatz (10) nach Anspruch 5, wobei er bei Erhitzen auf 120 bis 220 °C derart expandiert, dass die Expansion in der vertikalen Richtung verhältnismäßig größer als in der Richtung der Längsachse ist.

7. Expandierbarer Füllereinsatz (10) nach Anspruch 5 oder 6, wobei er bei Erhitzen auf 120 bis 220 °C derart expandiert, dass die Expansion in der vertikalen Richtung verhältnismäßig größer als in der horizontalen Richtung ist.

8. Expandierbarer Füllereinsatz (10) nach einem der Ansprüche 1 bis 7, wobei mindestens ein Fixierungselement (12, 2a, 7a) einen Hohlraum (9) umfasst, der sich parallel zu der Längsachse von der einen zu der anderen der parallelen Oberflächen erstreckt und in den Oberflächen mündet.

9. Expandierbarer Füllereinsatz (10) nach einem der Ansprüche 1 bis 8, wobei das expandierbare Material bei einer Temperatur im Bereich von 10 bis 40 °C nicht klebrig ist und wobei es mindestens eine Außenfläche umfasst, die sich von der einen zu der anderen der parallelen Oberflächen erstreckt und zumindest in einer ausgewählten Region der Außenfläche von einem Material bedeckt wird, das bei 10 bis 40 °C klebrig ist, wobei diese ausgewählte Region auf zwei Seiten von den zwei parallelen Oberflächen begrenzt wird.

10. Expandierbarer Füllereinsatz (10) nach einem der Ansprüche 1 bis 3, wobei die Außenfläche der selbsttragenden durchgängigen Struktur (11) so dimensioniert ist, dass sie einen im Wesentlichen einheitlichen Spalt (13) zwischen der Außenfläche und der Innenfläche des Hohlraums um den Umfang der selbsttragenden durchgängigen Struktur (11) herum von 1 bis 10 mm bildet.

11. Expandierbarer Füllereinsatz (10) nach einem der Ansprüche 1 bis 3, wobei die Polymermatrix nach Wärmeaktivierung um mindestens etwa 1000 Prozent expandiert.

12. Expandierbarer Füllereinsatz (10) nach einem der Ansprüche 1 bis 3 zum Füllen eines Hohlraums (2) mit einer Querschnittsform, die mindestens einen spitzen Winkel umfasst, und mit einer Innenfläche, wobei der Einsatz (10) eine selbsttragende durchgängige Struktur (11) mit einem Innenraum (9) und einer Außenfläche umfasst, die im Wesentlichen der Querschnittsform des Hohlraums (2) entspricht, jedoch die Innenfläche des Hohlraums (2) nicht berührt, wobei die Außenfläche der selbsttragenden durchgängigen Struktur (11) mindestens einen Vorsprung aufweist, der sich zu dem mindestens einen spitzen Winkel des Hohlraums (2) hin erstreckt, wobei ein Fixierungselement (12a, 2, 7a) von der selbsttragenden durchgängigen Struktur (11) zum Sichern des Einsatzes (10) an der Innenfläche des Hohlraums (2) hervorragt und wobei die Polymermatrix mindestens ein Polymer oder einen Polymervorläufer und mindestens ein latentes Treibmittel umfasst.

13. Expandierbarer Füllereinsatz (10) nach Anspruch 12, wobei der Einsatz weiterhin einen Vorsprung umfasst, der sich aus der Polymermatrix zusammensetzt und der sich in den Innenraum der selbsttragenden durchgängigen Struktur (11) erstreckt.

14. Verfahren zum Füllen oder Versiegeln eines Hohlraums (2) mit einer Innenfläche, wobei das Verfahren das Anbringen eines expandierbaren Füllereinsatzes (10) nach Anspruch 1 an der Innenfläche und das Erhitzen des expandierbaren Füllereinsatzes (10) auf eine Temperatur umfasst, die zum Aktivieren des mindestens einen latenten Treibmittels wirksam ist.

15. Fahrzeug mit einer hohlen Rahmenstruktur (1), die Formteile nach einem oder mehreren der Ansprüche 1 bis 9 nach der Expansion und Erhärtung dieser enthält.

## Revendications

1. Insert de remplissage expansible (10) destiné à remplir une cavité (2) qui possède une surface intérieure, ledit insert (10) comportant une structure continue autoporteuse (11), réalisée d'une seule pièce continue à partir d'une matrice de polymère comprenant au moins un polymère ou un précurseur de polymère et au moins un agent gonflant latent, et qui possède une surface extérieure qui est sensiblement parallèle à la forme intérieure de la cavité (2) mais qui est espacée de la surface intérieure de la cavité (2), et un élément de fixation (12, 2a), l'élément de fixation (12, 2a, 7a) étant soit
- une partie intégrante (12, 2a) de la structure continue (11) qui fait saillie de la structure continue autoporteuse pour fixer l'insert à la surface intérieure de la cavité (2), sous la forme de saillies d'engagement qui sont aptes à être insérées à travers des orifices (15) ménagés dans les parois de la cavité, soit
- une pièce (7a) constituée d'une substance adhésive,
**caractérisé en ce que** l'insert (11), y compris l'élément de fixation, est délimité par deux surfaces planes pratiquement parallèles.

2. Insert de remplissage expansible (10) selon la revendication 1, dans lequel les deux surfaces sont destinées à être pratiquement parallèles dans la mesure où elles forment entre elles un angle de 0° à 10°.

3. Insert de remplissage expansible (10) selon la revendication 1 ou la revendication 2, dans lequel ledit insert (10) comporte un espace intérieur (9) réalisé de préférence par ladite structure continue autoporteuse (11) sous une forme annulaire.

4. Insert de remplissage expansible (10) selon l'une quelconque des revendications 1 à 3, comprenant un corps principal constitué d'une matière à réticulation réactive qui contient ladite matrice de polymère comportant au moins un polymère ou un précurseur de polymère et au moins un agent gonflant latent, qui est expansible d'au moins 20% à une température dans la gamme de 120 à 220°C, lequel corps comprend au moins un élément de fixation (12 ; 2a, 7a) possédant respectivement un côté avant et un côté arrière, le côté avant de chaque élément de fixation (12, 2a, 7a) se trouvant dans l'une des surfaces parallèles, et le côté arrière se trouvant dans l'autre des surfaces parallèles.

5. Insert de remplissage expansible (10) selon la revendication 4, dans lequel, à l'état non expansé, il s'étend davantage dans une première direction, perpendiculaire à un axe longitudinal qui est perpendiculaire aux surfaces parallèles, que dans une seconde direction perpendiculaire à l'axe longitudinal et perpendiculaire à la première direction, la première direction étant la direction de la plus grande expansion et étant désignée la direction horizontale, tandis que la seconde direction perpendiculaire respectivement à l'axe longitudinal et à la direction horizontale est désignée la direction verticale.

6. Insert de remplissage expansible (10) selon la revendication 5, dans lequel, lorsqu'il est chauffé à une température de 120 à 220°C, il se dilate de telle manière que l'expansion dans la direction verticale est relativement plus grande que l'expansion dans la direction de l'axe longitudinal.

7. Insert de remplissage expansible (10) selon l'une quelconque des revendications 5 ou 6, dans lequel, lorsqu'il est chauffé à une température de 120 à 220°C, il se dilate de telle manière que l'expansion dans la direction verticale est relativement plus grande que l'expansion dans la direction horizontale.

8. Insert de remplissage expansible (10) selon l'une ou plusieurs des revendications 1 à 7, dans lequel au moins un élément de fixation (12, 2a, 7a) comprend une cavité (9) qui s'étend parallèlement à l'axe longitudinal de l'une des surfaces parallèles à l'autre, et débouche dans lesdites surfaces.

9. Insert de remplissage expansible (10) selon l'une ou plusieurs des revendications 1 à 8, dans lequel la matière expansible est non adhésive à une température dans la gamme de 10 à 40°C et dans lequel il possède au moins une surface extérieure qui s'étend de l'une des surfaces parallèles à l'autre et qui est recouverte, au moins dans une région sélectionnée de ladite surface extérieure, par une matière qui est adhésive à une température de 10 à 40°C, cette zone sélectionnée étant délimitée sur deux côtés par les deux surfaces parallèles.

10. Insert de remplissage expansible (10) selon l'une quelconque des revendications 1 à 3, dans lequel ladite surface extérieure de ladite une structure continue autoporteuse (11) est dimensionnée de manière à former, entre ladite surface extérieure et la surface intérieure de ladite cavité autour du périmètre de ladite structure continue autoporteuse (11), un espace sensiblement uniforme (13) de 1 à 10 mm.

11. Insert de remplissage expansible (1.0) selon l'une des revendications 1 à 3, dans lequel, après activation thermique, la matrice de polymère se dilate d'au moins 1000 pourcent environ.

12. Insert de remplissage expansible (10) selon l'une quelconque des revendications 1 à 3, destiné à remplir une cavité (2) qui a une forme en coupe transversale comprenant au moins un angle aigu et possédant une surface intérieure, ledit insert (10) comprenant une structure continue autoporteuse (11) ayant un espace intérieur (9) et une surface extérieure qui est sensiblement parallèle à la forme en coupe transversale de la cavité (2), mais qui n'est pas en contact avec la surface intérieure de la cavité (2), la surface extérieure de la structure continue autoporteuse (11) comportant au moins une saillie qui s'étend vers l'au moins un angle aigu de la cavité (2), un élément de fixation (12a, 2 ; 7a) faisant saillie de la structure continue autoporteuse (11) pour fixer l'insert (10) à la surface intérieure de la cavité (2), et ladite matrice de polymère comprenant au moins un polymère ou un précurseur de polymère et au moins un agent gonflant latent.

13. Insert de remplissage expansible (10) selon la revendication 12, ledit insert comprenant en outre une saillie, constituée de la matrice de polymère, qui s'étend dans l'espace intérieur de la structure continue autoporteuse (11).

14. Procédé de remplissage ou de scellement d'une cavité (2) possédant une surface intérieure, ledit procédé comprenant les étapes consistant à fixer un insert de remplissage expansible (10) selon la revendication 1 à ladite surface intérieure et à chauffer ledit insert de remplissage expansible (10) à une température efficace pour activer ledit au moins un agent gonflant latent.

15. Véhicule comprenant une structure de châssis creuse (1) qui contient des pièces moulées selon l'une ou plusieurs des revendications 1 à 9, après l'expansion et durcissement de celles-ci.
